# EUROPEAN PATENT APPLICATION

(11) **EP 4 075 283 A1**
(43) Date of publication of application: **19.10.2022**
(21) Application number: 22165528.5
(22) Date of filing: 30.03.2022
(51) Int. Cl.: G06F 11/36, G06F 8/41

(54) **METHOD AND APPARATUS FOR CONTINUOUS INTEGRATION TESTING**

(30) Priority: 14.05.2021 CN 202110528919
(71) Applicant: BEIJING BAIDU NETCOM SCIENCE TECHNOLOGY CO., LTD., Beijing 100085 (CN)
(72) Inventor: Yang, Tao, Beijing, 100085 (CN)
(74) Representative: Lucke, Andreas

(57) **Abstract**

The present disclosure provides a method and apparatus for continuous integration testing, and relates to the fields of cloud computing and testing technology. A specific implementation comprises: acquiring a to-be-tested script, and acquiring a plurality of pieces of environment information required for testing; selecting a test device conforming to hardware parameter information in the environment information from a test device cluster; initializing the test device according to non-hardware parameter information in the environment information, to obtain an initialized test device; and testing the to-be-tested script using the initialized test device, to generate a test result corresponding to the environment information. According to the present disclosure, it is possible to select the test device according to the hardware parameter information, and initialize the device to make the device conform to a test environment, which reduces the occupation of the device during the testing, thereby further reducing the test cost.

## Description

### TECHNICAL FIELD

The present disclosure relates to the field of computer technology, specifically to the fields of cloud computing and testing technology, and particularly to a method and apparatus for continuous integration testing.

### BACKGROUND

Continuous integration testing, as an important testing method to ensure a quality of software, has become the mainstream testing means of current agile development modes. The essence of the continuous integration testing is to verify the quality of the software through frequent integration.

In the related art, there are still problems of low test efficiency and high test cost in the current enterprise-level software field.

### SUMMARY

A method and apparatus for continuous integration testing, an electronic device and a storage medium are provided.

In a first aspect, embodiments of the present disclosure provide a method for continuous integration testing, applied to a server end, the method comprising: acquiring a to-be-tested script, and acquiring a plurality of pieces of environment information required for testing, the environment information comprising hardware parameter information and non-hardware parameter information; selecting a test device conforming to the hardware parameter information in the environment information from a test device cluster; initializing the test device according to the non-hardware parameter information in the environment information, to obtain an initialized test device; and testing the to-be-tested script using the initialized test device, to generate a test result corresponding to the environment information.

In a second aspect, embodiments of the present disclosure provide a system for continuous integration testing, applied to a server end, the system comprising a continuous integration server and a resource management server, wherein the continuous integration server is configured to acquire a to-be-tested script, acquire a plurality of pieces of environment information required for testing, and send a test application including the plurality of pieces of environment information to the resource management server, the environment information comprising hardware parameter information and non-hardware parameter information, the resource management server is configured to select, in response to receiving the test application, a test device conforming to the hardware parameter information in the environment information from a test device cluster; and initialize a test device indicated by the hardware parameter information according to the non-hardware parameter information in the environment information, to obtain an initialized test device, and the continuous integration server is further configured to test the to-be-tested script using the initialized test device, to generate a test result corresponding to the environment information.

In a third aspect, embodiments of the present disclosure provide an apparatus for continuous integration testing, applied to a server end, the apparatus comprising: an acquiring unit, configured to acquire a to-be-tested script, and acquire a plurality of pieces of environment information required for testing, the environment information comprising hardware parameter information and non-hardware parameter information; a selecting unit, configured to select a test device conforming to the hardware parameter information in the environment information from a test device cluster; an initializing unit, configured to initialize the test device according to the non-hardware parameter information in the environment information, to obtain an initialized test device; and a testing unit, configured to test the to-be-tested script using the initialized test device, to generate a test result corresponding to the environment information.

In a fourth aspect, embodiments of the present disclosure provide an electronic device, comprising: one or more processors; and a memory, storing one or more programs, wherein the one or more programs, when executed by the one or more processors, cause the one or more processors to implement the method for continuous integration testing provided by the first aspect.

In a fifth aspect, embodiments of the present disclosure provide a computer-readable medium, storing a computer program thereon, wherein the program, when executed by a processor, causes the processor to implement the method for continuous integration testing provided by the first aspect.

In a sixth aspect, an embodiment of the present disclosure provides a computer program product, comprising a computer program, wherein the computer program, when executed by a processor, implements the method for continuous integration testing provided by the first aspect.

According to the solution of the present disclosure, it is possible to select the test device according to the hardware parameter information, and initialize the device to make the device conform to a test environment, which avoids the problem in the prior art that the test cost is high due to the need to prepare a large number of devices for different test environments, and reduces the occupation of the device during the testing, thereby further reducing the test cost.

### BRIEF DESCRIPTION OF THE DRAWINGS

After reading detailed descriptions of non-limiting embodiments given with reference to the following accompanying drawings, other features, objectives and advantages of the present disclosure will be more apparent.
Fig. 1 is a diagram of an exemplary system architecture in which some embodiments of the present disclosure may be applied;
Fig. 2 is a flowchart of an embodiment of a method for continuous integration testing according to the present disclosure;
Fig. 3 is a schematic diagram of an application scenario of the method for continuous integration testing according to the present disclosure;
Fig. 4 is a flowchart of another embodiment of the method for continuous integration testing according to the present disclosure;
Fig. 5 is a schematic structural diagram of an embodiment of a system for continuous integration testing according to the present disclosure;
Fig. 6 is a schematic structural diagram of an embodiment of an apparatus for continuous integration testing according to the present disclosure; and
Fig. 7 is a block diagram of an electronic device used to implement the method for continuous integration testing in the embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

In the technical solution of the present disclosure, the acquisition, storage, application, etc. of the personal information of a user are all comply with the provisions of the relevant laws and regulations, necessary confidentiality measures are taken, and public order and good customs are not violated.

It should be noted that the embodiments in the present disclosure and the features in the embodiments may be combined with each other on a non-conflict basis. The present disclosure will be described below in detail with reference to the accompanying drawings and in combination with the embodiments.

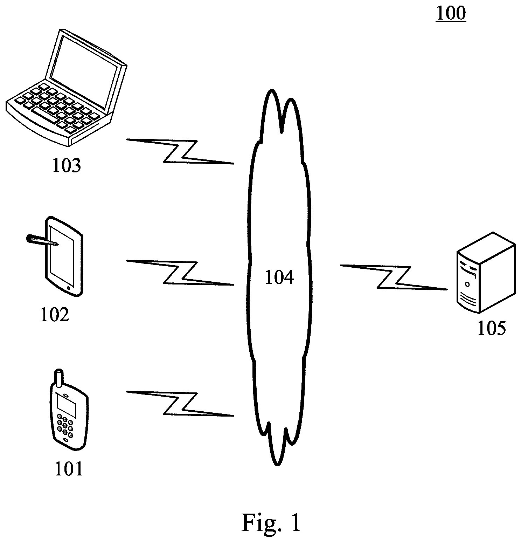

Fig. 1 illustrates an exemplary system architecture 100 in which an embodiment of a method for continuous integration testing or an apparatus for continuous integration test according to the present disclosure maybe applied.

As shown in Fig. 1, the system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may use the terminal devices 101, 102 and 103 to interact with the server 105 via the network 104, to receive or send a message, etc. Various communication client applications (e.g., a video application, a live streaming application, an instant communication tool, a mailbox client, and social platform software) may be installed on the terminal devices 101, 102 and 103.

Here, the terminal devices 101, 102 and 103 may be hardware or software. When being the hardware, the terminal devices 101, 102 and 103 may be various electronic devices having a display screen, the electronic devices including, but not limited to, a smartphone, a tablet computer, an e-book reader, a laptop portable computer, a desktop computer, and the like. When being the software, the terminal devices 101, 102 and 103 may be installed in the above listed electronic devices. The terminal devices 101, 102 and 103 maybe implemented as a plurality of pieces of software or a plurality of software modules (e.g., software or software modules for providing a distributed service), or may be implemented as a single piece of software or a single software module, which will not be specifically limited here.

The server 105 may be a server providing various services, for example, a backend server providing support for the terminal devices 101, 102 and 103. The backend server may perform processing such as an analysis on received data such as a to-be-tested script, and feed back a processing result (e.g., a test result) to the terminal devices.

It should be noted that the method for continuous integration testing provided in the embodiments of the present disclosure may be performed by the server 105. Correspondingly, the apparatus for continuous integration testing may be provided in the server 105.

It should be appreciated that the numbers of the terminal devices, the networks and the servers in Fig. 1 are merely illustrative. Any number of terminal devices, networks and servers maybe provided based on actual requirements.

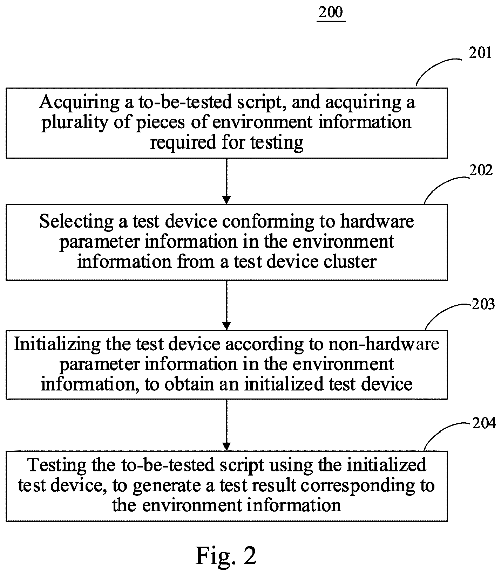

Further referring to Fig. 2, Fig. 2 illustrates a flow 200 of an embodiment of a method for continuous integration testing according to the present disclosure. Here, the method for continuous integration testing, applied to a server end, includes the following steps:

Step 201, acquiring a to-be-tested script, and acquiring a plurality of pieces of environment information required for testing, the environment information including hardware parameter information and non-hardware parameter information.

In this embodiment, an executing body (e.g., the server 105 shown in Fig. 1) on which the method for continuous integration testing runs may acquire the to-be-tested script. In addition, the executing body may further acquire the plurality of pieces of environment information required to be adopted for the testing. The environment information refers to an environment adopted for the testing, i.e., a heterogeneous environment.

The hardware parameter information in the environment information refers to information related to the hardware of a machine, for example, a CPU architecture, a disk type and a GPU card type. The non-hardware parameter information refers to environment information other than the above hardware parameter information, and specifically, may be various environment information, for example, an operating system.

The above server end may include only a single server device, or may include a server cluster.

Step 202, selecting a test device conforming to the hardware parameter information in the environment information from a test device cluster.

In this embodiment, for environment information in the plurality of pieces of environment information, the above executing body may select the test device from the test device cluster, the test device conforming to the hardware parameter information in the environment information (e.g., at least one piece of environment information). That is, the above executing body selects a device used for the testing, through the hardware parameter information. For example, the selected test device is required to conform to all information defined by the hardware parameter information, the information including the CPU architecture, the disk type and the CPU card type. The device referred to in the present disclosure may be a physical machine or a virtual machine.

Step 203, initializing the test device according to the non-hardware parameter information in the environment information, to obtain an initialized test device.

In this embodiment, the above executing body may initialize the selected test device according to the non-hardware parameter information in the environment information, such that the initialized test device conforms to the non-hardware parameter information in the environment information.

Step 204, testing the to-be-tested script using the initialized test device, to generate a test result corresponding to the environment information.

In this embodiment, the above executing body may test the to-be-tested script using the initialized test device, thereby generating the test result. The test result corresponds to the environment information, that is, is obtained through the test performed using the environment information.

According to the method provided in the above embodiment of the present disclosure, it is possible to select the test device according to the hardware parameter information, and initialize the device to make the device conform to a test environment, which avoids the problem in the prior art that the test cost is high due to the need to prepare a large number of devices for different test environments, and reduces the occupation of the device during the testing, thereby further reducing the test cost.

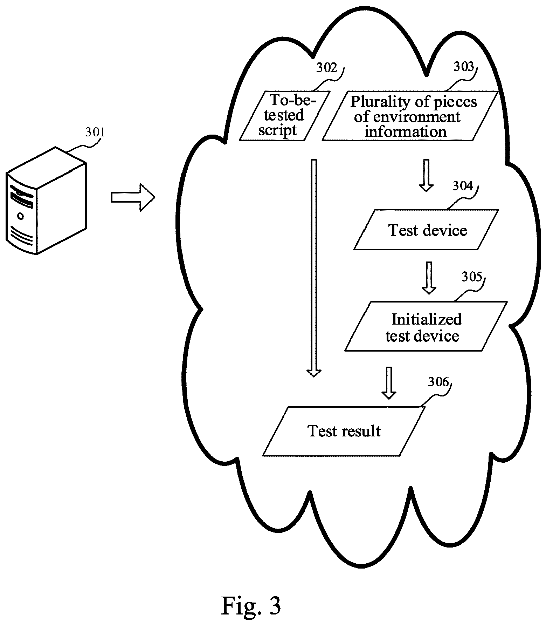

Further referring to Fig. 3, Fig. 3 is a schematic diagram of an application scenario of the method for testing continuous integration according to this embodiment. In the application scenario of Fig. 3, an executing body 301 acquires a to-be-tested script 302, and acquires a plurality of pieces of environment information 303 required for testing, for example, 150 pieces of environment information. Here, the environment information 303 includes hardware parameter information and non-hardware parameter information. The executing body 301 performs: selecting a test device 304 conforming to the hardware parameter information in the environment information 303 from a test device cluster. The executing body 301 initializes the test device 304 according to the non-hardware parameter information in the environment information, to obtain an initialized test device 305. The executing body 301 tests the to-be-tested script 302 using the initialized test device 305, to generate a test result 306 corresponding to the environment information.

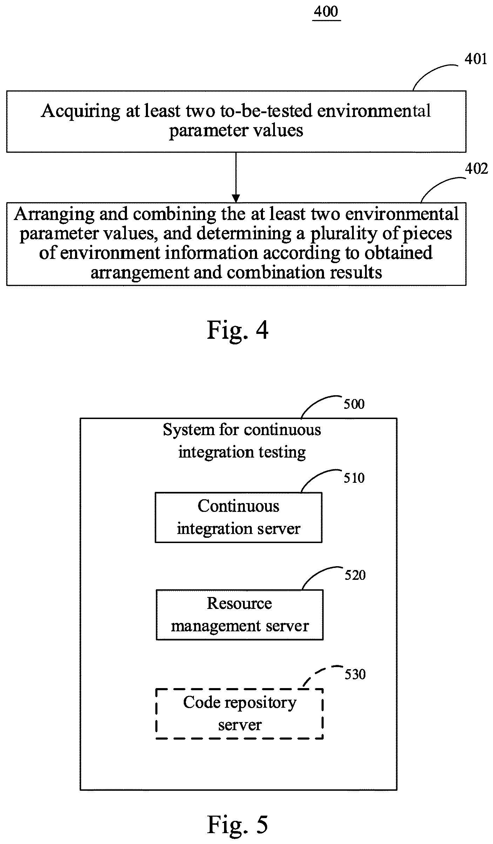

Further referring to Fig. 4, Fig. 4 illustrates a generation flow 400 of a plurality of pieces of environment information. The flow 400 includes the following steps:

Step 401, acquiring at least two to-be-tested environmental parameter values, the environmental parameter values including a hardware parameter value of hardware parameter information and a non-hardware parameter value of non-hardware parameter information.

In this embodiment, an executing body (e.g., the server or terminal devices shown in Fig. 1) on which the method for continuous integration testing runs may acquire the at least two to-be-tested environmental parameter values. For example, if the hardware parameter information includes a disk type, the hardware parameter value of the hardware parameter information may refer to an SSD type. If the non-hardware parameter information includes an operating system, the non-hardware parameter value of the non-hardware parameter information may refer to CentOS X.

The executing body in this embodiment may be the executing body in any of the embodiments of the present disclosure. In addition, the executing body in this embodiment maybe an other executing body.

Step 402, arranging and combining the at least two environmental parameter values, and determining a plurality of pieces of environment information according to obtained arrangement and combination results.

In this embodiment, the above executing body may arrange and combine the at least two environmental parameter values to obtain the arrangement and combination results. In this way, the above executing body may determine the plurality of pieces of environment information according to the obtained arrangement and combination results.

In practice, the above executing body may determine, in various ways, the plurality of pieces of environment information according to the arrangement and combination results. For example, the above executing body may directly use the arrangement and combination results as the plurality of pieces of environment information. In addition, the executing body may alternatively perform preset processing on the arrangement and combination results, and use the preset processing result as the plurality of pieces of environment information. The preset processing here may refer to, for example, a deletion for a specified result in the arrangement and combination results.

In this embodiment, all environments required to be tested may be quickly obtained through the arranging and combining.

In some alternative implementations of this embodiment, the at least two environmental parameter values of both the hardware parameter information and the non-hardware parameter information are represented as a matrix, and the number of pieces of both the hardware parameter information and the non-hardware parameter information is equal to the number of rows of the matrix.

In these alternative implementations, the at least two environmental parameter values may exist in the form of a matrix. Each row of the matrix corresponds to one environmental parameter. The environmental parameter includes the hardware parameter information and non-hardware parameter information described above.

For example, if the number of pieces of the hardware parameter information and the non-hardware parameter information is 4, and the hardware parameter information and the non-hardware parameter information are respectively hardware parameter information (MACHINE), an operating system (OS), a kernel (KERNEL), and a software version (ENV) of the operating system, the matrix may have 4 rows, which are respectively:
MACHINE: ["Cloud.2c8g", "Bare-metal.gpu"]
OS: ["CentOS 7.3", "CentOS 7.5", "CentOS 8.0", "Ubuntu 20.04"]
KERNEL: ["3.10.0", "4.18.1"]
ENV: ["Docker:18.03", "Docker:19.03"].

In this embodiment, the form of a heterogeneous matrix may be adopted to clearly indicate various parameters required to constitute heterogeneous environment information, thereby efficiently and accurately generating the environment information.

In some alternative implementations of any of the embodiments of the present disclosure, the above method may further include: determining, for the plurality of pieces of environment information, a tested number of concurrent environments. The selecting a test device conforming to the hardware parameter information in the environment information from a test device cluster includes: selecting, for environment information of pieces of the number of the concurrent environments in the plurality of pieces of environment information, a test device conforming to hardware parameter information in the environment information of the pieces of the number of the concurrent environments from the test device cluster.

In these alternative implementations, the above executing body may determine the number of the concurrent environments and use the number of the concurrent environments as the number of the pieces of the environment information. Thereafter, the above executing body may select the test device, the test device conforming to the hardware parameter information in the environment information of the pieces of the above number of the concurrent environments. Specifically, the number of the concurrent environments may be acquired directly from this device or an other electronic device, or may be determined in real time according to a preset rule.

The number of the concurrent environments refers to the number of pieces of environment information adopted for each test. A number of selected test devices is greater than or equal to the above number of the concurrent environments.

In these implementations, by limiting the number of the concurrent environments of the environment information, the occupation of the device and the test progress are effectively controlled.

In some alternative implementations of any of the embodiments of the present disclosure, after a to-be-tested script is tested using an initialized test device, the above method may further include: performing, in response to unadopted environment information being present in the plurality of pieces of environment information, steps 202-204 in sequence on other untested environment information in the plurality of pieces of environment information, to obtain a test result corresponding to the other environment information.

In these alternative implementations, after testing the at least one piece of environment information described above, the above executing body may further test the other environment information. Thus, the plurality of pieces of environment information required for the testing may be completely tested. That is, the above executing body may repeat the test steps until all the environment information in the plurality of pieces of environment information are adopted.

After completing all the test processes for the plurality of pieces of environment information, the above executing body may integrate all the test results to generate a final test report, and feed back the final test report to the terminal device of the research and development personnel.

In practice, the performing in sequence may refer to performing the test steps on the environment information in the plurality of pieces of environment information in serial or parallel.

Through these implementations, a comprehensive detection for the plurality of pieces of environment information maybe implemented.

In some alternative implementations of any of the embodiments of the present disclosure, after the to-be-tested script is tested using the initialized test device, the above method may further include: modifying, in response to a test for finally adopted environment information in adopted environment information being completed, a state marker of the selected test device to an unselected state.

In these alternative implementations, the above executing body may recycle the test device in the situation where the test for the finally adopted environment information (e.g., the at least one piece of environment information described above) is completed. Specifically, the above executing body may modify the state marker of the selected test device to the unselected state. In this way, the device is in a usable state, and thus can continue to participate in subsequent tests. During the testing, the test device may be marked as a selected state, i.e., an unusable state. The selected test device here is a selected test device for a final test. In practice, after each test is completed, the above executing body may adopt the technical solution in this implementation.

In these implementations, the test device may be recycled in time, thereby avoiding the excessive occupation of the device.

In some alternative implementations of any of the embodiments of the present disclosure, testing the to-be-tested script using the initialized test device may include: determining login condition information of the selected test device, the login condition information including an IP address; and testing the to-be-tested script through the login condition information and the initialized test device.

In these alternative implementations, the above executing body may first determine the login condition information of the test device before using the test device. In practice, only in the situation where the login condition information is available, the above executing body can perform the testing by using the test device. The login condition information may be various, for example, may include the IP address. In addition, the login condition information may further include a login password, a machine room location, and the like.

In these implementations, through the login condition information, it may be ensured that the testing is successfully performed by using the test device.

As shown in Fig. 5, the present disclosure further provides a system 500 for continuous integration test, applied to a server end. The system includes a continuous integration server 510 and a resource management server 520. Here,

The continuous integration server is configured to acquire a to-be-tested script, acquire a plurality of pieces of environment information required for testing, and send a test application including the plurality of pieces of environment information to the resource management server. Here, the environment information includes hardware parameter information and non-hardware parameter information. The resource management server is configured to select, in response to receiving the test application, a test device conforming to the hardware parameter information in the environment information from a test device cluster; and initialize a test device indicated by the hardware parameter information, according to the non-hardware parameter information in the environment information, to obtain an initialized test device. The continuous integration server is further configured to test the to-be-tested script using the initialized test device, to generate a test result corresponding to the environment information.

In this embodiment, it is possible to select the test device according to the hardware parameter information, and initialize the device to make the device conform to a test environment, which avoids the problem in the prior art that the test cost is high due to the need to prepare a large number of devices for different test environments, and effectively reduces the occupation of the device during the testing, thereby further reducing the test cost.

In some alternative implementations of this embodiment, the system further includes a code repository server 530 (alternatively). The code repository server is configured to send, in response to receiving a build code used to build the to-be-tested script, build trigger information to the continuous integration server, the build trigger information including the build code. The continuous integration server is further configured to build, in response to receiving the build trigger information, the to-be-tested script according to the build code.

In these alternative implementations, the system may further include the code repository server. The server may implement the reception for the build code submitted by the research and development personnel, and trigger the to-be-tested script built by the continuous integration server.

In some alternative implementations of this embodiment, the continuous integration server is further configured to determine, for the plurality of pieces of environment information, a tested number of concurrent environments. The resource management server is further configured to select, for environment information of pieces of the number of the concurrent environments in the plurality of pieces of environment information, a test device conforming to hardware parameter information in the environment information of the pieces of the number of the concurrent environments from the test device cluster.

In these implementations, by limiting the number of the concurrent environments of the environment information, the occupation of the device and the test progress are effectively controlled.

In some alternative implementations of this embodiment, the continuous integration server is further configured to send, in response to a test for finally adopted environment information in adopted environment information being completed, test completion information to the resource management server. The resource management server is further configured to modify, in response to receiving the test completion information, a state marker of the selected test device to an unselected state.

In these implementations, the test device may be recycled in time, thereby avoiding the excessive occupation of the device.

In some alternative implementations of this embodiment, the plurality of pieces of environment information are generated by: acquiring at least two to-be-tested environmental parameter values, the environmental parameter values including a hardware parameter value of the hardware parameter information and a non-hardware parameter value of the non-hardware parameter information; and arranging and combining the at least two environmental parameter values, and determining the plurality of pieces of environment information according to obtained arrangement and combination results.

Alternatively, the at least two environmental parameter values of both the hardware parameter information and the non-hardware parameter information are represented as a matrix, and a number of pieces of both the hardware parameter information and the non-hardware parameter information is equal to a number of rows of the matrix.

In some alternative implementations of this embodiment, the continuous integration server is further configured to determine login condition information of the selected test device, the login condition information including an IP address; and test the to-be-tested script through the login condition information and the initialized test device.

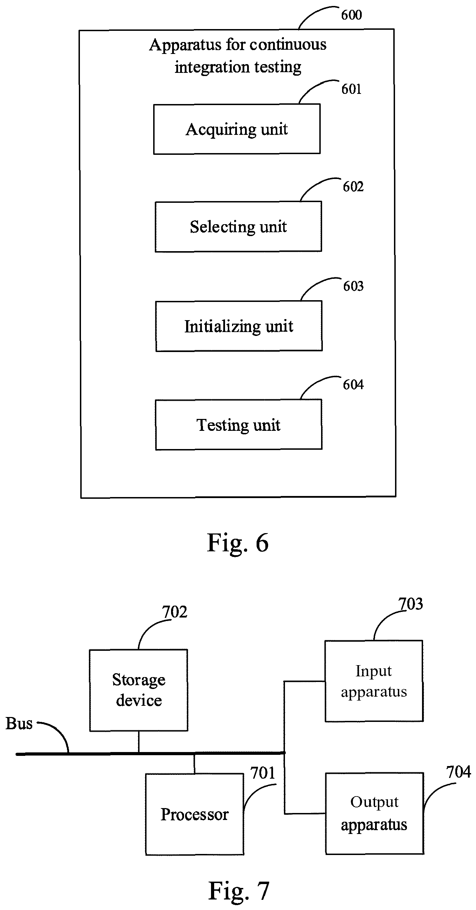

Further referring to Fig. 6, as an implementation of the method shown in the above drawings, the present disclosure provides an embodiment of an apparatus for continuous integration testing. The embodiment of the apparatus corresponds to the embodiment of the method shown in Fig. 2, and may include the features or effects same as or corresponding to those in the embodiment of the method shown in Fig. 2, in addition to the features described below. The apparatus may be applied in various electronic devices.

As shown in Fig. 6, the apparatus 600 for continuous integration testing in this embodiment includes: an acquiring unit 601, a selecting unit 602, an initializing unit 603 and a testing unit 604. Here, the acquiring unit 601 is configured to acquire a to-be-tested script, and acquire a plurality of pieces of environment information required for testing. Here, the environment information includes hardware parameter information and non-hardware parameter information. The selecting unit 602 is configured to select a test device conforming to the hardware parameter information in the environment information from a test device cluster. The initializing unit 603 is configured to initialize the test device according to the non-hardware parameter information in the environment information, to obtain an initialized test device. The testing unit 604 is configured to test the to-be-tested script using the initialized test device, to generate a test result corresponding to the environment information.

In this embodiment, for specific processes of the acquiring unit 601, the selecting unit 602, the initializing unit 603 and the testing unit 604 in the apparatus 600 for continuous integration testing, and their technical effects, reference may be made to relative descriptions of step 201, step 202, step 203 and step 204 in the corresponding embodiment of Fig. 2 respectively, which will not be repeatedly described here.

In some alternative implementations of this embodiment, the plurality of pieces of environment information are generated by: acquiring at least two to-be-tested environmental parameter values, the environmental parameter values comprising a hardware parameter value of the hardware parameter information and a non-hardware parameter value of the non-hardware parameter information; and arranging and combining the at least two environmental parameter values, and determining the plurality of pieces of environment information according to obtained arrangement and combination results.

In some alternative implementations of this embodiment, the at least two environmental parameter values of both the hardware parameter information and the non-hardware parameter information are represented as a matrix, and a number of pieces of both the hardware parameter information and the non-hardware parameter information is equal to a number of rows of the matrix.

In some alternative implementations of this embodiment, the apparatus further includes: a determining unit, configured to determine, for the plurality of pieces of environment information, a tested number of concurrent environments. The selecting unit is further configured to select the test device conforming to the hardware parameter information in the environment information from the test device cluster by: selecting, for environment information of pieces of the number of the concurrent environments in the plurality of pieces of environment information, a test device conforming to hardware parameter information in the environment information of the pieces of the number of the concurrent environments from the test device cluster.

In some alternative implementations of this embodiment, the apparatus further includes: a modifying unit, configured to modify, in response to a test for finally adopted environment information in adopted environment information being completed, a state marker of the selected test device to an unselected state, after the to-be-tested script is tested using the initialized test device.

In some alternative implementations of this embodiment, the testing unit is further configured to test the to-be-tested script using the initialized test device by: determining login condition information of the selected test device, the login condition information comprising an IP address; and testing the to-be-tested script through the login condition information and the initialized test device.

According to an embodiment of the present disclosure, the present disclosure further provides an electronic device, a readable storage medium and a computer program product.

As shown in Fig. 7, Fig. 7 is a block diagram of an electronic device used to implement the method for continuous integration testing according to the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may alternatively represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 7, the electronic device includes: one or more processors 701, a memory 702, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories if desired. Similarly, a plurality of electronic devices may be connected, and the devices provide some necessary operations (for example, as a server array, a set of blade servers, or a multi-processor system). In Fig. 7, one processor 701 is used as an example.

The memory 702 is a non-transitory computer readable storage medium provided by the present disclosure. The memory stores instructions executable by at least one processor, so that the at least one processor performs the method for continuous integration testing provided by the present disclosure. The non-transitory computer readable storage medium of the present disclosure stores computer instructions for causing a computer to perform the method for continuous integration testing provided by the present disclosure.

The memory 702, as a non-transitory computer readable storage medium, may be used to store non-transitory software programs, non-transitory computer executable programs and modules, such as program instructions/modules corresponding to the method for continuous integration testing in the embodiments of the present disclosure (for example, the acquiring unit 601, the selecting unit 602, the initializing unit 603 and the testing unit 604 shown in Fig. 6). The processor 701 executes the non-transitory software programs, instructions, and modules stored in the memory 702 to execute various functional applications and data processing of the server, that is, to implement the method for continuous integration testing in the foregoing method embodiment.

The memory 702 may include a storage program area and a storage data area, where the storage program area may store an operating system and at least one function required application program; and the storage data area may store data created by the use of the electronic device according to the method for continuous integration testing, etc. In addition, the memory 702 may include a high-speed random access memory, and may also include a non-transitory memory, such as at least one magnetic disk storage device, a flash memory device, or other non-transitory solid-state storage devices. In some embodiments, the memory 702 may optionally include memories remotely provided with respect to the processor 701, and these remote memories may be connected to the electronic device of the method for continuous integration testing through a network. Examples of the above network include but are not limited to the Internet, intranet, local area network, mobile communication network, and combinations thereof.

The electronic device of the method for continuous integration testing may further include: an input apparatus 703 and an output apparatus 704. The processor 701, the memory 702, the input apparatus 703, and the output apparatus 704 may be connected through a bus or in other methods. In Fig. 7, connection through a bus is used as an example.

The input apparatus 703 may receive input digital or character information, and generate key signal inputs related to user settings and function control of the electronic device of the method for continuous integration testing, such as touch screen, keypad, mouse, trackpad, touchpad, pointing stick, one or more mouse buttons, trackball, joystick and other input apparatuses. The output apparatus 704 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), and the Internet.

The computer system may include a client and a server. The client and the server are generally far from each other and usually interact through the communication network. The relationship between the client and the server is generated by computer programs that run on the corresponding computer and have a client-server relationship with each other. The server may be a cloud server, also known as a cloud computing server or a cloud host. The server is a host product in the cloud computing service system to solve the defects of management difficulty in traditional physical host and virtual private server (VPS) services Large, and weak business scalability. The server may also be a distributed system server, or a server combined with blockchain.

The flow charts and block diagrams in the accompanying drawings illustrate architectures, functions and operations that may be implemented according to the systems, methods and computer program products of the various embodiments of the present disclosure. In this regard, each of the blocks in the flow charts or block diagrams may represent a module, a program segment, or a code portion, said module, program segment, or code portion including one or more executable instructions for implementing specified logic functions. It should also be noted that, in some alternative implementations, the functions denoted by the blocks may occur in a sequence different from the sequences shown in the accompanying drawings. For example, any two blocks presented in succession may be executed, substantially in parallel, or they may sometimes be in a reverse sequence, depending on the function involved. It should also be noted that each block in the block diagrams and/or flow charts as well as a combination of blocks may be implemented using a dedicated hardware-based system performing specified functions or operations, or by a combination of a dedicated hardware and computer instructions.

The units involved in the embodiments of the present disclosure may be implemented by means of software or hardware. The described units may alternatively be provided in a processor. For example, the processor may be described as: a processor comprising an acquiring unit, a selecting unit, an initializing unit and a testing unit. Here, the names of these units do not in some cases constitute a limitation to such units themselves. For example, the acquiring unit may alternatively be described as "a unit for acquiring a to-be-tested script and acquiring a plurality of pieces of environment information required for testing."

In another aspect, the present disclosure further provides a computer readable medium. The computer readable medium may be the computer readable medium included in the apparatus described in the above embodiments, or a stand-alone computer readable medium not assembled into the apparatus. The computer readable medium carries one or more programs. The one or more programs, when executed by the apparatus, cause the apparatus to perform following test steps: acquiring a to-be-tested script and acquiring a plurality of pieces of environment information required for testing, the environment information including hardware parameter information and non-hardware parameter information; selecting a test device conforming to the hardware parameter information in the environment information from a test device cluster; initializing the test device according to the non-hardware parameter information in the environment information, to obtain an initialized test device; and testing the to-be-tested script using the initialized test device, to generate a test result corresponding to the environment information.

The above description only provides an explanation of the preferred embodiments of the present disclosure and the technical principles used. It should be appreciated by those skilled in the art that the inventive scope of the present disclosure is not limited to the technical solutions formed by the particular combinations of the above-described technical features. The inventive scope should also cover other technical solutions formed by any combinations of the above-described technical features or equivalent features thereof without departing from the concept of the present disclosure. Technical schemes formed by the above-described features being interchanged with, but not limited to, technical features with similar functions disclosed in the present disclosure are examples.

## Claims

1. A method for continuous integration testing, applied to a server end, the method comprising:
acquiring (201) a to-be-tested script, and acquiring a plurality of pieces of environment information required for testing, the environment information comprising hardware parameter information and non-hardware parameter information;
selecting (202) a test device conforming to the hardware parameter information in the environment information from a test device cluster;
initializing (203) the test device according to the non-hardware parameter information in the environment information, to obtain an initialized test device; and
testing (204) the to-be-tested script using the initialized test device, to generate a test result corresponding to the environment information.

2. The method according to claim 1, wherein the plurality of pieces of environment information are generated by:
acquiring (401) at least two to-be-tested environmental parameter values, the environmental parameter values comprising a hardware parameter value of the hardware parameter information and a non-hardware parameter value of the non-hardware parameter information; and
arranging and combining (402) the at least two environmental parameter values, and determining the plurality of pieces of environment information according to obtained arrangement and combination results.

3. The method according to claim 2, wherein the at least two environmental parameter values of both the hardware parameter information and the non-hardware parameter information are represented as a matrix, and a number of pieces of both the hardware parameter information and the non-hardware parameter information is equal to a number of rows of the matrix.

4. The method according to any one of claims 1-3, further comprising:
determining, for the plurality of pieces of environment information, a tested number of concurrent environments,
wherein the selecting a test device conforming to the hardware parameter information in the environment information from a test device cluster comprises:
selecting, for environment information of pieces of the number of the concurrent environments in the plurality of pieces of environment information, a test device conforming to hardware parameter information in the environment information of the pieces of the number of the concurrent environments from the test device cluster.

5. The method according to any one of claims 1-4, wherein, after the testing (204) the to-be-tested script using the initialized test device, the method further comprises:
modifying, in response to a test for finally adopted environment information in adopted environment information being completed, a state marker of the selected test device to an unselected state.

6. The method according to any one of claims 1-4, wherein the testing (204) the to-be-tested script using the initialized test device comprises:
determining login condition information of the selected test device, the login condition information comprising an IP address; and
testing the to-be-tested script through the login condition information and the initialized test device.

7. A system for continuous integration testing, applied to a server end, the system comprising a continuous integration server (510) and a resource management server (520),
wherein the continuous integration server (510) is configured to acquire a to-be-tested script, acquire a plurality of pieces of environment information required for testing, and send a test application including the plurality of pieces of environment information to the resource management server (520), the environment information comprising hardware parameter information and non-hardware parameter information,
the resource management server (520) is configured to select, in response to receiving the test application, a test device conforming to the hardware parameter information in the environment information from a test device cluster; and initialize a test device indicated by the hardware parameter information according to the non-hardware parameter information in the environment information, to obtain an initialized test device, and
the continuous integration server (510) is further configured to test the to-be-tested script using the initialized test device, to generate a test result corresponding to the environment information.

8. The system according to claim 7, further comprising a code repository server (530),
wherein the code repository server (530) is configured to send, in response to receiving a build code used to build the to-be-tested script, build trigger information to the continuous integration server (510), the build trigger information comprising the build code, and
the continuous integration server (510) is further configured to build, in response to receiving the build trigger information, the to-be-tested script according to the build code.

9. The system according to claim 7 or 8, wherein the continuous integration server (510) is further configured to determine, for the plurality of pieces of environment information, a tested number of concurrent environments, and
the resource management server (520) is further configured to select, for environment information of pieces of the number of the concurrent environments in the plurality of pieces of environment information, a test device conforming to hardware parameter information in the environment information of the pieces of the number of the concurrent environments from the test device cluster.

10. The system according to claim 7 or 8, wherein the continuous integration server (510) is further configured to send, in response to a test for finally adopted environment information in adopted environment information being completed, test completion information to the resource management server (520), and
the resource management server (520) is further configured to modify, in response to receiving the test completion information, a state marker of the selected test device to an unselected state.

11. An apparatus for continuous integration testing, applied to a server end, the apparatus comprising:
an acquiring unit (601), configured to acquire a to-be-tested script, and acquire a plurality of pieces of environment information required for testing, the environment information comprising hardware parameter information and non-hardware parameter information;
a selecting unit (602), configured to select a test device conforming to the hardware parameter information in the environment information from a test device cluster;
an initializing unit (603), configured to initialize the test device according to the non-hardware parameter information in the environment information, to obtain an initialized test device; and
a testing unit (604), configured to test the to-be-tested script using the initialized test device, to generate a test result corresponding to the environment information.

12. The apparatus according to claim 11, wherein the plurality of pieces of environment information are generated by:
acquiring at least two to-be-tested environmental parameter values, the environmental parameter values comprising a hardware parameter value of the hardware parameter information and a non-hardware parameter value of the non-hardware parameter information; and
arranging and combining the at least two environmental parameter values, and determining the plurality of pieces of environment information according to obtained arrangement and combination results.

13. The apparatus according to claim 12, wherein the at least two environmental parameter values of both the hardware parameter information and the non-hardware parameter information are represented as a matrix, and a number of pieces of both the hardware parameter information and the non-hardware parameter information is equal to a number of rows of the matrix.

14. A non-transitory computer readable storage medium, storing a computer instruction, wherein the computer instruction is used to cause a computer to perform the method according to any one of claims 1-6.

15. A computer program product, comprising a computer program, wherein the computer program, when executed by a processor, implements the method according to any one of claims 1-6.
